# EUROPEAN PATENT SPECIFICATION

(11) **EP 2 150 507 B1**
(45) Date of publication and mention of the grant of the patent: **11.04.2018**
(21) Application number: 07784188.0
(22) Date of filing: 29.05.2007
(51) Int. Cl.: C04B 24/00, C04B 24/02, C04B 28/02, C04B 24/12, C04B 103/67, C04B 111/20

(54) **ANTIMICROBIAL CEMENTITIOUS COMPOSITION, METHOD AND ARTICLE**
ANTIMIKROBIELLE ZEMENTZUSAMMENSETZUNG, VERFAHREN UND GEGENSTAND
COMPOSITION CIMENTAIRE ANTIMICROBIENNE, PROCÉDÉ ET ARTICLE

(43) Date of publication of application: 10.02.2010
(73) Proprietor: MICROBAN PRODUCTS COMPANY, Huntersville, NC 28078 (US)
(72) Inventor: ONG, Ivan, W., Huntersville, NC 28078 (US); SWOFFORD, H.Wayne, Huntersville, NC 28078 (US)
(74) Representative: Boult Wade Tennant
(86) International application number: PCT/US2007/069891
(87) International publication number: WO 2008/147411

(56) References cited:
- WO-A1-2004/000953
- WO-A1-2006/067390
- JP-A- 09 295 851
- JP-A- 2000 351 681
- JP-A- 2002 226 242
- JP-A- 2002 234 759
- JP-A- 2003 292 358
- JP-A- 2004 067 463
- US-A- 4 556 426
- US-A- 5 215 747
- DATABASE WPI Week 198721 Thomson Scientific, London, GB; AN 1987-146545 XP000002656830, & JP 62 083349 A (SANKIN KOGYO KK) 16 April 1987 (1987-04-16)

## Description

### FIELD OF THE INVENTION

The present invention relates to an antimicrobial cementitious composition, a method for making such an antimicrobial cementitious composition as well as to a method for making a cured antimicrobial cementitious article.

### BACKGROUND OF THE INVENTION

Cementitious compositions have been used in the construction industry for years. Examples of cementitious compositions include cement, concrete, mortar, grout and stucco. Stucco is commonly used in the construction of buildings, particularly on the exterior of a building as a siding treatment. A framework such as paper or metal wire conventionally is affixed to a building, for example, and stucco is applied to the framework. Stucco is typically comprised of cement and inert materials such as sand and lime.

A common problem with a cementitious composition such as stucco is that it has a high pH in its wet-mix phase or when newly applied. A high pH (e.g., greater than 9) intrinsically protects against microorganisms and will naturally protect the material from fungi and other microbial colonization. The cementitious composition is gradually neutralized over time, however, and the untreated cementitious composition loses this innate efficacy against microorganisms such as bacteria, algae, mold and fungus. Furthermore, stucco is porous and absorbs moisture, which is particularly attractive to microorganisms.

Grout commonly finds applications in shower and tub enclosures. Moisture conditions facilitate growth of mold and other undesirable microbial growth, marring the appearance of the shower/tub area and causing malodor.

Previous attempts have been made to add antimicrobial agents to cementitious compositions. However, there are problems that have yet to be solved with known antimicrobial cementitious compositions.

The high pH of cementitious compositions places unique demands on the particular choice of an antimicrobial agent. Since the pH of a cured cementitious composition tends to remain very high even after it sets, the particular antimicrobial agent chosen must be very resistant to chemical degradation due to the high pH. Some antimicrobial agents such as triclosan are also particularly sensitive to the combination of high pH and ultraviolet light, such that the antimicrobial agent causes yellowing when the two conditions are present.

Other attempts have focused on the addition of antimicrobial agents to various components added to cementitious compositions, such as fibers (added for strength) or lightweight particles (added to reduce overall density of the cured cementitious article). For example, U.S. Patent No. 6,162,845 discloses the use of triclosan in fibers for blending with concrete and like materials.

However, this approach adds complexity, as the antimicrobial agent must be engineered to remain durably affixed to the added component while still being available to provide antimicrobial efficacy. Doped additional components then also becomes a required component, adding material and expense.

Another problem with many known antimicrobial agents is that they disrupt the cure chemistry of a cementitious composition. For examples, certain antimicrobial agents may be susceptible to coupling with impurities and will lead to possible color changes.

Still another problem with many known antimicrobial agents is that they have poor solubility in a cementitious composition. The agents may leach out of the cementitious composition over time and/or upon exposure to conditions typical of the use environment. Also as a result of poor solubility, some antimicrobial agents cannot be homogenously distributed within the finished cementitious substrate.

WO 2006/067390 discloses the treatment of wallboards with a fungicidally effective amount of fludioxonil and in particular with synergistic combinations of fludioxonil and other fungicides.

WO 2004/000953 discloses a coating material that contains a biocide which bonds to solid particles in a carrier material and is released in a delayed manner therefrom which either has a pH value of 11.0 or is provided with a base material for the coating whereby the pH value is at least 11.0.

JP 2004067463 discloses an antifungal polymer cement comprising a polyol, water, a polyisocyanate compound, a cement compound and if needed an antifungus agent and an aggregate.

JP 62083349 discloses a composition comprising a powder containing calcium phosphate, a powder or aqueous solution of a polymer of one or more unsaturated carboxylic acids and metronidazole.

JP 2000351681 discloses spraying a solution comprising one or more of an efflorescence inhibitor, an antibacterial agent, an antifungal agent and an anti-algal agent onto the air exposed surface of a concrete structure to prevent concrete from whitening due to efflorescence and from blackening due to microorganismal propagation.

### BRIEF DESCRIPTION OF THE DRAWINGS

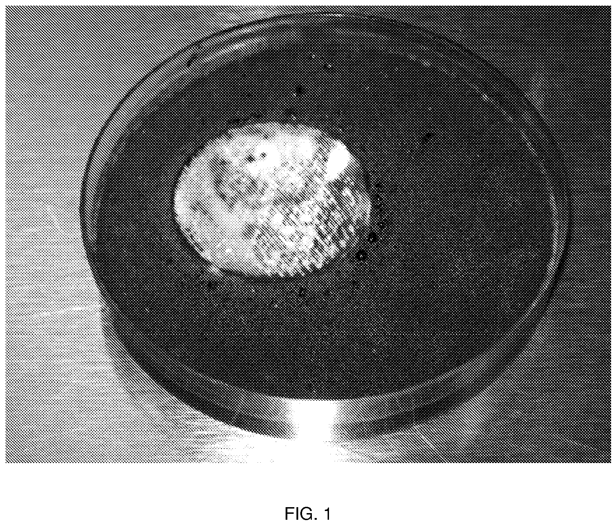

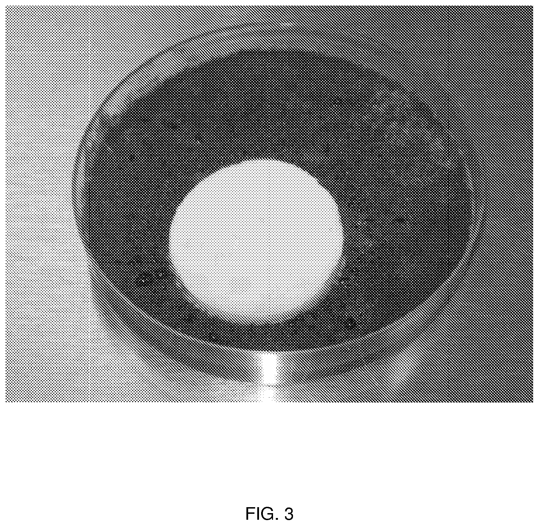

FIGS. 1-3 are black-and-white photographs of sample and control grout discs after inoculation and challenge with *Aspergillus niger.*

### DETAILED DESCRIPTION OF PREFERRED EMBODIMENT(S)

In this document, certain terms such as antimicrobial, antibacterial, antifungal, microbistatic, cement, cementitious, and the like may be used. While not intended to be limiting, the following definitions are provided as an aid to the reader.

The term "antimicrobial" as used herein includes biostatic activity, i.e., where the proliferation of microbiological species is reduced or eliminated, and true biocidal activity where microbiological species are killed. Furthermore, the terms "microbe" or "antimicrobial" should be interpreted to specifically encompass bacteria and fungi as well as other single-celled organisms such as mold, mildew and algae.

The term "cement" as used herein refers to a commonly known building material comprising powdered materials which develop strong adhesive qualities when combined with water. Cement generally is a dry powder made of a mixture of calcined limestone, silica, alumina, lime, iron oxide, magnesia and clay, typically used with water and sand or gravel to make concrete and mortar.

The term "cementitious" as used herein refers to the presence of cement. A cementitious composition comprises cement but also may further comprise inert materials such as sand and lime. "Cement" as used herein may further comprise other additives such as stabilizers, durability enhancers, colorants, viscosity modifiers, and the like.

Examples of cementitious compositions include, but are not limited to, concrete, grout, mortar and stucco. A preferred cementitious composition is stucco, which typically is comprised of cement and sand. Stucco generally is commercially available in a premixed form.

The antimicrobial cementitious premix compound as disclosed herein has antimicrobial activity and is comprised of a cementitious material and the antimicrobial agent Additive IF4 (Microban Products Company, Huntersville, North Carolina). The Additive IF4 formulation contains the active ingredient (±)-1 -[2-(2,4-dichlorophenyl)-2-(2-propenyloxy)ethyl]-1*H*-imidazole (CAS No. 73790-28-0), commonly known as imazalil (Jannsen Pharmaceutica, Belgium) and having the structure:

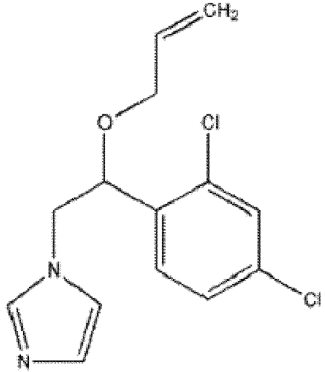

Especially favored is (±)-1 -[2-(2,4-dichlorophenyl)-2-(2-propenyloxy)ethyl]-1 *H-*imidazole sulfate (CAS No. 58594-72-2). Imazalil, imazalil sulfate or a mixture thereof are referred to collectively herein as "imazalil agent".

In one embodiment, an antimicrobial cementitious composition for imparting antimicrobial characteristics to a cement-based composition comprises a cementitious premix compound and imazalil, imazalil sulfate or a mixture thereof. Imazalil, imazalil sulfate or a mixture thereof solubilizes very efficiently in aqueous grout and cementitious mixes.

This species also appears to be thermally stable up to 160°C and above. Thermal stability makes imazalil, imazalil sulfate or a mixture thereof especially well-suited for inclusion in the production of cementitious powder by various manufacturers, as these powders are typically dried and packed at elevated temperatures. Many other antimicrobial/antifungal agents tend to discolor and clump when so thermally exposed.

The imazalil, imazalil sulfate or a mixture thereof has proven to be UV stable and exhibits no discoloration after prolonged exposure to ultraviolet irradiation (UVA 340 lamps, 168 hrs). Resistance to ultraviolet radiation and discoloring is advantageous given the typical outdoor environment of cured cementitious articles.

In another embodiment, a method of making an aqueous antimicrobial cementitious composition includes combining a quantity of imazalil, imazalil sulfate or a mixture thereof with cement-based compound(s) to form an antimicrobial cementitious composition. The weight concentration of antimicrobial agent in the cementitious composition can be as low as 250 ppm, based upon the weight of the cementitious composition. A practical upper end to the
useful concentration range is about 5000 ppm. However, it is within the scope of the present method to use concentrations of antimicrobial agents greater than 5000 ppm, if specific cement-based compounds and other factors so warrant.

In preferred embodiments, the combined weight concentration of the antimicrobial agent in the cementitious composition is in a range from about 750 ppm to about 3500 ppm based upon the weight of the cementitious composition. More preferred embodiments utilize a range from about 900 ppm to about 2500 ppm.

A method for making an antimicrobial cementitious composition comprises the steps of combining, e.g. by admixture, a quantity of imazalil, imazalil sulfate or a mixture thereof with cement-based compound to form an antimicrobial cementitious composition wherein the combined weight concentration of the antimicrobial agent in the cementitious composition is at least about 250 ppm based upon the weight of the cementitious composition.

In an embodiment wherein the cementitious composition is a dry premix. In a second embodiment, the cementitious composition is a liquid premix dissolved in an aqueous solvent (e.g. water). The cementitious composition can be stucco or grout mix.

The uniquely high pH of cementitious systems places unique demands on the particular choice of an antimicrobial agent. As the pH of a cured cementitious system tends to remain very high even after it sets, the particular antimicrobial agent chosen must be very resistant to hydrolysis at the high pH. If the antimicrobial agent is susceptible to hydrolysis, then it
would be most likely be quickly degraded. Some antimicrobial agents such as triclosan are also particular sensitive to exposure to ultraviolet light such as from sunlight and high pH, and such antimicrobial agents will yellow when the two elements are present.

As stated above, the antimicrobial agent for use in the antimicrobial cementitious composition of the present disclosure is imazalil, imazalil sulfate or a mixture Imazalil, imazalil sulfate or a mixture thereof satisfactorily addresses this stability requirement as it has outstanding high pH stability and can successfully endure the wet-phase cement mixing and curing steps. Moreover, imazalil, imazalil sulfate or a mixture thereof does not disrupt the cure chemistry of the cementitious composition and seems to have no effect on the setting time.

A third embodiment is a solid-phase cured cementitious article having persistent antimicrobial properties. This embodiment comprises a cured cement-based compound and imazalil, imazalil sulfate or a mixture thereof, the latter in a concentration of from at least about 250 ppm based on the weight of the cement-based compound in its premix form.

While fresh cementitious/stucco compositions have a high intrinsic pH that will naturally protect the material from micro-organism attack, with time, the structure will gradually lose its intrinsic high pH due to atmospheric neutralization. However, imazalil, imazalil sulfate or a mixture thereof has an optimal combination of stability and solubility in the cementitious composition. It does not dissolve out of stucco at neutral to acidic pHs as its solubility in that range is very low. Additionally, these compound(s) are not easily leached out of cured, solid-phase stucco or grout. Imazalil, imazalil sulfate or a mixture thereof is not degraded by neutral or acidic rain water.

Thus, due to its excellent combination of low leach and good stability, imazalil, imazalil sulfate or a mixture thereof is an excellent antimicrobial agent for use in the antimicrobial cementitious composition, as it is very easy to add to stucco and dissolves rapidly into a slurry mix. Thus, the protection provided by imazalil, imazalil sulfate or a mixture thereof is expected to be durably present long after the intrinsic pH-mediated protection has waned.

Stucco that is affixed to the exterior surface of a house is very usually painted. While possible fungicides in the paints protect the exterior surface, antimicrobial agents incorporated into the cementitious material itself offer excellent overall protection to the entire stucco structure. There is beneficial protection provided by the antimicrobial agents disclosed herein, as moisture may leach and promote fungal growth from within the wall outwards (e.g., water leaks and/or seepage through seams or flaws in the surface). Furthermore, the implemented imazalil, imazalil sulfate or a mixture thereof is better retained within the cementitious composition in a conventionally installed and painted stucco exterior treatment, as the exterior paint coating acts as a barrier to the elements and possible leaching.

In an alternative embodiment, the present composition can contain a second antimicrobial agent in addition to the imazalil, imazalil sulfate or a mixture thereof. For example, chlorothalonil or 2,4,5,6-Tetrachloroisophthalonitrile (CAS No. 1897-45-6) is commercially available under the trade name MICROBAN ADDITIVE M15™ (Microban Products Company, Huntersville, North Carolina).

As used herein the term "azoles" should be interpreted to include any of the "azole" antimicrobial agents known to those skilled the art. Preferred azoles include, but are not limited to, thiabendazole, propiconazole, tebuconazole, and mixtures thereof.

Another preferred oxathiazine is bethoxazin commercially available under the trade name MICROBAN ADDITIVE GBF™ (Microban Products Company, Huntersville, North Carolina).

Ttriamine diamines suitable for use as the second antimicrobial agent include, but are not limited to, 1,3,5-triazine-2,4-diamine, cyclopropyl-N'-(1,1-dimethylethyl)-6-(methylthio)-1,3,5-triazine-2, 4-diamine, commercially available as MICROBAN ADDITIVE IA1™ (Microban Products Company, Huntersville, North Carolina).

A preferred ortho-phenyl phenol is sodium orthophenyl phenol (NaOPP) which is commercially available under the trade name MICROBAN ADDITIVE P2™ (Microban Products Company, Huntersville, North Carolina).

For ease of discussion, the above chemicals are collectively referred to herein as "antimicrobial agents." One criterion in the selection of an antimicrobial agent as used in the practice of the present composition is that it be efficacious at commercially acceptable concentrations; in other words, that the efficacious agent concentration be commercially cost-permissive and not cause undue harm to the surface to which it is affixed or to the environment.

### EXAMPLE 1

An 80 lb bag of BAL grout compound was obtained. Additive IF4, comprising imazalil sulfate, was admixed to the dry grout compound at levels sufficient to provide active agent concentrations of 1000 ppm (0.1%) and 2000 ppm (0.2%), each based upon the total weight of the dry admixture. A batch of dry admixture weighing 200 grams was used to form discs or "pucks". Water was added (32 g) according to packaging instructions, after which the mix was thoroughly mixed before being cast into round molds of approximately 1.5 inches diameter.

In addition, an untreated set of samples prepared according to packaging instructions was cast as control for testing comparison.

Following the neutralization treatment, the samples initially were plated against *Aspergillus niger* (a common household black mold) using the AATCC 30 Part III test. The 30 Part III test is an aggressive 7-day antifungal evaluation in which the test samples are exposed to high levels of fungal spores and incubated under optimal conditions (elevated temperatures and humidity) for the spores to germinate.

At the end of the 7-day incubation period, the test plates were removed from the test chamber and the samples were evaluated for fungal attack and encroachment. The results of the evaluation are shown in Table 1.

**Table 1.**

| Sample | Zone of Inhibition, mm | | Growth |
|---|---|---|---|
| Imazalil Sulfate, ppm | *K. pneumoniae* | *S. aureus* | *A. niger* |
| 0 (Control) | 4 | 7 | NO |
| 500 | 5 | 5 | NO |
| 1000 | 5 | 6 | NO |
| 2000 | 5 | 6 | NO |

That the negative controls also show zones of inhibition and lack of *A*. *niger* growth is unsurprising. The alkaline nature of freshly cured grout articles, discussed above, confer an intrinsic but transient antimicrobial property thereto. The pH decreases and the native antimicrobial effect dissipates over time, as the cementitious article is subjected to typical use environments such as a shower or tub enclosure, residential building exterior, and the like.

### EXAMPLE 2

Grout samples were prepared and cured as in Example 1, with antimicrobial agent admixed into the dry compound at levels of 0 ppm, 1000 ppm, and 2000 ppm based upon the total weight of the dry mix and antimicrobial agent (excluding water). Water was added, the slurry mixed, and 1.5-inch diameter pucks cast.

After air-curing, the samples were exposed for eight hours in either of a QUV/Spray Accelerated Weathering Controller or Xenon Testing Chamber Xe-3-HS (both by Q-Panel Lab Products, Cleveland, Ohio). The QUV exposure is an assay well known in the art for simulating aging, discoloration and/or degradation caused by conditions of ultraviolet radiation exposure, such as would be encountered in an outdoor application.

Thereafter, the sample discs were subjected to one hour of water spray, followed by one hour of condensation, alternatingly repeated for a total of eight hours. This treatment neutralizes the pH of the grout samples, simulating brief real-world exposure of the grout articles to, e.g., a shower stall application.

Samples then were plated against *Aspergillus niger* using the 30 Part III test. At the end of the 168-hour incubation period, the test plates were removed from the test chamber and the samples were evaluated for fungal attack and encroachment. The antimicrobial agent tested and the results of the evaluation are shown in Table 2; control and experimental plates are shown in FIGS. 1-3.

*A. niger* was observed to grow in the control plate medium and on the cementitious sample (FIG. 1). Compared to the lack of growth observed on the negative control of Example 1, this sample demonstrates the readily impermanent character of the pH-based antimicrobial effect inherent in fresh cementitious articles.

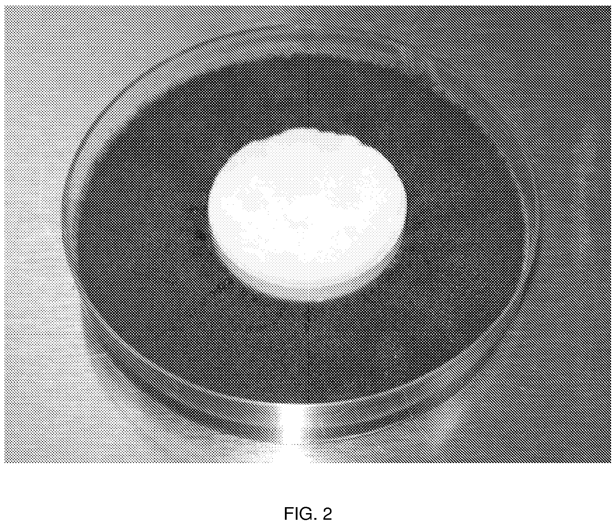

In sharp contrast, no growth was observed on the neutralized cementitious sample pucks having 1000 ppm or 2000 ppm imazalil sulfate incorporated therein (FIGS. 2-3). Having accounted for any pH-mediated antimicrobial property via serial washing, we conclude that the imazalil agent in the pucks prevents *A*. *niger* growth thereon.

**Table 2.**

| Sample | Growth |
|---|---|
| Imazalil Sulfate. ppm | *A. niger* |
| 0 (Control) | YES |
| 1000 | NO |
| 2000 | NO |

FIG. 1 is a photograph of an untreated grout sample that was exposed to *Aspergillus niger.* The fungus appears to have encroached upon the edges and exposed major face of the grout disc sample, which shows initial signs of growth. The untreated sample appears to offer little resistance to fungal attack.

FIG. 2 is a photograph of a BAL grout sample at 1000 ppm of imazalil agent. At 1000 ppm, the grout puck offers strong resistance to fungal attack, with the exposed major surface retaining its pristine white appearance.

FIG. 3 is a photograph of a BAL grout puck at 2000 ppm of imazalil agent. At 2000 ppm, the grout sample appears to offer significant disruption to fungal encroachment in its immediate vicinity.

It will therefore be readily understood by those persons skilled in the art that the present composition and methods are susceptible of broad utility and application. Accordingly, while the present composition and methods have been described herein in detail in relation to its preferred embodiment, it is to be understood that this disclosure is only illustrative and exemplary and is made merely for purposes of providing a full and enabling disclosure.

## Claims

1. An antimicrobial cementitious composition, comprising:
a cement-based compound; and
imazalil, imazalil sulfate, or a mixture thereof.

2. The antimicrobial cementitious composition according to claim 1 wherein the imazalil, imazalil sulfate or a mixture thereof is present in an amount of at least 250 ppm based on the weight of the cement-based compound.

3. The antimicrobial cementitious composition according to any of the preceding claims wherein the imazalil, imazalil sulfate or a mixture thereof is present in an amount from 750 ppm to 3000 ppm based on the weight of the cement-based compound.

4. The antimicrobial cementitious composition according to any of the preceding claims wherein the composition is a cement premix, concrete premix, mortar premix, grout premix, or stucco premix.

5. The antimicrobial cementitious composition according to any of the preceding claims wherein the antimicrobial cementitious composition further comprises:
a second antimicrobial agent selected from an orthophenyl phenol, an orthophenyl phenol salt, a tolyl diiodomethyl sulfone, a zinc pyrithione, an oxathiazine, an azole, a chlorothalonil, or a triazine diamine.

6. The antimicrobial cementitious composition according to claim 1 wherein the imazalil, imazalil sulfate or mixture thereof is present in an amount of at least 250 ppm based on the weight of the cementitious composition.

7. A method of making an antimicrobial cementitious composition, comprising:
combining a quantity of imazalil, imazalil sulfate or a mixture thereof with a quantity of a cement-based compound to form a cementitious composition;
wherein the weight concentration of imazalil, imazalil sulfate or a mixture thereof in the cementitious composition is at least 250 ppm based upon the weight of the cement-based compound.

8. The method according to claim 7 wherein the imazalil, imazalil sulfate or mixture thereof is combined in an amount from 500 ppm to 5000 ppm based upon the weight of the cement-based compound.

9. The method according to claim 7 wherein the weight concentration of the imazalil, imazalil sulfate or a mixture thereof in the cementitious composition is at least 250 ppm based on the weight of the cementitious composition.

10. The method according to claims 7 or 8 wherein the antimicrobial cementitious composition is a cement mix, a concrete mix, a mortar mix, a grout mix, or a stucco mix.

11. The method according to any of claims 7, 8 or 10, further comprising:
combining with a quantity of a cement-based compound a second antimicrobial agent that is an orthophenyl phenol, an orthophenyl phenol salt, a tolyl diiodomethyl sulfone, a zinc pyrithione, an oxathiazine, an azole, a chlorothalonil, or a triazine diamine.

12. A method for making a cured antimicrobial cementitious article, comprising:
combining an antimicrobial cementitious composition according to claim 7 with water;
affixing the aqueous antimicrobial cementitious composition to a substrate; and
curing the affixed antimicrobial cementitious composition.

13. The method according to claim 12 wherein the imazalil, imazalil sulfate or a mixture thereof is present in an amount from 500 ppm to 5000 ppm based on the weight of the cement-based compound.

14. The method according to claim 12 or 13 wherein the antimicrobial cementitious composition is a cement mix, a concrete mix, a mortar mix, a grout mix, or a stucco mix.

15. The method according to any of claims 12 to 14 wherein the antimicrobial cementitious composition further includes an orthophenyl phenol, an orthophenyl phenol salt, a tolyl diiodomethyl sulfone, a zinc pyrithione, an oxathiazine, an azole, a chlorothalonil, or a triazine diamine.

## Patentansprüche

1. Antimikrobielle zementartige Zusammensetzung, umfassend:
eine zementbasierte Verbindung; und
Imazalil, Imazalilsulfat, oder eine Mischung davon.

2. Antimikrobielle zementartige Zusammensetzung nach Anspruch 1, wobei das Imazalil, Imazalilsulfat oder eine Mischung davon in einer Menge von mindestens 250 ppm, bezogen auf das Gewicht der zementbasierten Verbindung, vorhanden ist.

3. Antimikrobielle zementartige Zusammensetzung nach einem der vorangehenden Ansprüche, wobei das Imazalil, Imazalilsulfat oder eine Mischung davon in einer Menge von 750 ppm bis 3000 ppm, bezogen auf das Gewicht der zementbasierten Verbindung, vorhanden ist.

4. Antimikrobielle zementartige Zusammensetzung nach einem der vorangehenden Ansprüche, wobei die Zusammensetzung eine Zement-Vormischung, Beton-Vormischung, Mörtel-Vormischung, Fugenkitt-Vormischung, oder Stuck-Vormischung ist.

5. Antimikrobielle zementartige Zusammensetzung nach einem der vorangehenden Ansprüche, wobei die antimikrobielle zementartige Zusammensetzung weiterhin umfasst:
ein zweites antimikrobielles Mittel, ausgewählt aus einem Orthophenylphenol, einem Orthophenylphenolsalz, einem Tolyldiiodmethylsulfon, einem Zinkpyrithion, einem Ooxathiazin, einem Azol, einem Chlorthalonil oder einem Triazindiamin.

6. Antimikrobielle zementartige Zusammensetzung nach Anspruch 1, wobei das Imazalil, Imazalilsulfat oder Mischung davon in einer Menge von mindestens 250 ppm, bezogen auf das Gewicht der zementartigen Zusammensetzung, vorhanden ist.

7. Verfahren zur Herstellung einer antimikrobiellen zementartigen Zusammensetzung, umfassend:
Kombinieren einer Menge an Imazalil, Imazalilsulfat oder einer Mischung davon mit einer Menge einer zementbasierten Verbindung unter Bildung einer zementartigen Zusammensetzung;
wobei die Gewichtskonzentration von Imazalil, Imazalilsulfat oder einer Mischung davon in der zementartigen Zusammensetzung mindestens 250 ppm beträgt, bezogen auf das Gewicht der zementbasierten Verbindung.

8. Verfahren nach Anspruch 7, wobei das Imazalil, das Imazalilsulfat oder die Mischung davon in einer Menge von 500 ppm bis 5000 ppm, bezogen auf das Gewicht der zementbasierten Verbindung, kombiniert wird.

9. Verfahren nach Anspruch 7, wobei die Gewichtskonzentration des Imazalils, Imazalilsulfats oder einer Mischung davon in der zementartigen Zusammensetzung mindestens 250 ppm beträgt, bezogen auf das Gewicht der zementartigen Zusammensetzung.

10. Verfahren nach Anspruch 7 oder Anspruch 8, wobei die antimikrobielle zementartige Zusammensetzung ein Zementgemisch, ein Betongemisch, ein Mörtelgemisch, ein Fugenkittgemisch, oder ein Stuckgemisch ist.

11. Verfahren nach einem der Ansprüche 7, 8 oder 10, weiterhin folgendes umfassend:
Kombinieren einer Menge einer zementbasierten Verbindung, eines zweiten antimikrobiellen Mittels, das ein Orthophenylphenol, ein Orthophenylphenolsalz, ein Tolyldiiodmethylsulfon, ein Zinkpyrithion, ein Oxathiazin, ein Azol, ein Chlorthalonil, oder ein Triazindiamin ist.

12. Verfahren zur Herstellung eines gehärteten antimikrobiellen zementartigen Gegenstands, umfassend:
Kombinieren einer antimikrobiellen zementartigen Zusammensetzung nach Anspruch 7 mit Wasser;
Anheften der wässrigen antimikrobiellen zementartigen Zusammensetzung an ein Substrat; und
Härten der angehefteten antimikrobiellen zementartigen Zusammensetzung.

13. Verfahren nach Anspruch 12, wobei das Imazalil, Imazalilsulfat oder eine Mischung davon in einer Menge von 500 ppm bis 5000 ppm, bezogen auf das Gewicht der zementbasierte Verbindung, vorhanden ist.

14. Verfahren nach Anspruch 12 oder 13, wobei die antimikrobielle zementartige Zusammensetzung ein Zementgemisch, ein Betongemisch, ein Mörtelgemisch, ein Fugenkittgemisch oder ein Stuckgemisch ist.

15. Verfahren nach einem der Ansprüche 12 bis 14, wobei die antimikrobielle zementartige Zusammensetzung weiterhin ein Orthophenylphenol, ein Orthophenylphenolsalz, ein Tolyldiiodmethylsulfon, ein Zinkpyrithion, ein Oxathiazin, ein Azol, ein
Chlorthalonil oder ein Triazindiamin umfasst.

## Revendications

1. Composition cimentaire antimicrobienne, comprenant :
un composé à base de ciment ; et
de l'imazalil, du sulfate d'imazalil, ou un mélange de ceux-ci.

2. Composition cimentaire antimicrobienne selon la revendication 1, dans laquelle l'imazalil, le sulfate d'imazalil ou un mélange de ceux-ci est présent en une quantité d'au moins 250 ppm en se basant sur le poids du composé à base de ciment.

3. Composition cimentaire antimicrobienne selon l'une quelconque des revendications précédentes, dans laquelle l'imazalil, le sulfate d'imazalil ou un mélange de ceux-ci est présent en une quantité comprise entre 750 ppm et 3 000 ppm en se basant sur le poids du composé à base de ciment.

4. Composition cimentaire antimicrobienne selon l'une quelconque des revendications précédentes, où la composition est un pré-mélange de ciment, un pré-mélange de béton, un pré-mélange de mortier, un pré-mélange de coulis de ciment, ou un pré-mélange de stuc.

5. Composition cimentaire antimicrobienne selon l'une quelconque des revendications précédentes, où la composition cimentaire antimicrobienne comprend en outre :
un second agent antimicrobien sélectionné parmi un orthophénylphénol, un sel d'orthophénylphénol, une tolyldiiodométhylsulfone, une pyrithione de zinc, une oxathiazine, un azole, un chlorothalonile, ou une triazinediamine.

6. Composition cimentaire antimicrobienne selon la revendication 1, dans laquelle l'imazalil, le sulfate d'imazalil ou un mélange de ceux-ci est présent en une quantité d'au moins 250 ppm en se basant sur le poids de la composition cimentaire.

7. Procédé de fabrication d'une composition cimentaire antimicrobienne, comprenant :
la combinaison d'une quantité d'imazalil, de sulfate d'imazalil ou d'un mélange de ceux-ci avec une quantité d'un composé à base de ciment afin de former une composition cimentaire ;
où la concentration en poids de l'imazalil, du sulfate d'imazalil ou d'un mélange de ceux-ci dans la composition cimentaire est d'au moins 250 ppm en se basant sur le poids du composé à base de ciment.

8. Procédé selon la revendication 7, dans lequel l'imazalil, le sulfate d'imazalil ou un mélange de ceux-ci est combiné en une quantité comprise entre 500 ppm et 5 000 ppm en se basant sur le poids du composé à base de ciment.

9. Procédé selon la revendication 7, dans lequel la concentration en poids de l'imazalil, du sulfate d'imazalil ou d'un mélange de ceux-ci dans la composition cimentaire est d'au moins 250 ppm en se basant sur le poids de la composition cimentaire.

10. Procédé selon les revendications 7 ou 8, dans lequel la composition cimentaire antimicrobienne est un mélange de ciment, un mélange de béton, un mélange de mortier, un mélange de coulis de ciment, ou un mélange de stuc.

11. Procédé selon l'une quelconque des revendications 7, 8 ou 10, comprenant en outre :
la combinaison, avec une quantité d'un composé à base de ciment, d'un second agent antimicrobien qui est un orthophénylphénol, un sel d'orthophénylphénol, une tolyldiiodométhylsulfone, une pyrithione de zinc, une oxathiazine, un azole, un chlorothalonile, ou une triazine diamine.

12. Procédé pour fabriquer un article cimentaire antimicrobien durci, comprenant :
la combinaison d'une composition cimentaire antimicrobienne selon la revendication 7 avec de l'eau ;
l'apposition de la composition cimentaire antimicrobienne aqueuse sur un substrat ; et
le durcissement de la composition cimentaire antimicrobienne apposée.

13. Procédé selon la revendication 12, dans lequel l'imazalil, le sulfate d'imazalil ou un mélange de ceux-ci est présent en une quantité comprise entre 500 ppm et 5 000 ppm en se basant sur le poids du composé à base de ciment.

14. Procédé selon la revendication 12 ou 13, dans lequel la composition cimentaire antimicrobienne est un mélange de ciment, un mélange de béton, un mélange de mortier, un mélange de coulis de ciment, ou un mélange de stuc.

15. Procédé selon l'une quelconque des revendications 12 à 14, dans lequel la composition cimentaire antimicrobienne comprend en outre un orthophénylphénol, un sel d'orthophénylphénol, une tolyldiiodométhylsulfone, une pyrithione de zinc, une oxathiazine, un azole, un chlorothalonile, ou une triazine diamine.
